# EUROPEAN PATENT SPECIFICATION

(11) **EP 1 445 472 B1**
(45) Date of publication and mention of the grant of the patent: **09.04.2008**
(21) Application number: 03002399.8
(22) Date of filing: 04.02.2003
(51) Int. Cl.: F02M 51/06, F02M 61/16, F16K 31/00

(54) **Metering device with dynamic sealing**
Dosiervorrichtung mit dynamischer Dichtung
Dispositif de dosage avec joint dynamique

(43) Date of publication of application: 11.08.2004
(73) Proprietor: Siemens VDO Automotive S.p.A., 56040 Fauglia (Pisa) (IT)
(72) Inventor: Gestri, Luca, 56023 S. Lorenzo A.C.-Cascina (IT); Matteucci, Luca, 56124 Pisa (IT)
(74) Representative: Maier, Daniel Oliver

(56) References cited:
- EP-A- 1 046 809
- EP-A- 1 111 230
- WO-A-01/23747
- DE-A- 10 016 247
- DE-A- 10 035 168
- DE-A- 19 958 704
- US-B1- 6 194 812

## Description

The present invention relates to a metering device for dosing pressurized fluids, in particular an injection valve for a fuel injection system in an internal combustion engine, comprising a valve body with a fluid chamber for the pressurized fluid to be dosed, the fluid chamber terminating with a metering opening, an axially moveable valve needle passing through the fluid chamber, the valve needle having a first end that controls the opening and closing of the metering opening, and a second end that cooperates with an actuator assembly arranged in an actuator chamber and controlling the axial movement of the valve needle, and a sealing element hydraulically isolating the actuator chamber and the fluid chamber.

Such a metering device is disclosed for example in the European Patent application EP 1 046 809 A2.

In the manufacture of piezoelectric actuator-controlled valves for high-pressure direct injection for gasoline engines, it is essential to provide a hydraulic sealing capable of isolating the space through which the pressurized gasoline travels, i.e. a fluid chamber, from that where the actuator is arranged, i.e. an actuator chamber.

Fundamental requirements for this sealing element are
- the ability to operate at high pressures of the fluid, exceeding 200 bar, and at its related peaks of pressure and hydraulic ram induced by the opening and closing of the injector needle,
- the guarantee of effectiveness during the whole expected lifetime of the injector, including resistance to breakage, creep, fatigue loading, and the like,
- satisfactory service life of the component in its operating environment, including chemical tolerance to gasoline, resistance to terminal stresses, and the like,
- a minimum number of mechanical parts and a total reliability of the element, and
- minimal material, manufacturing and assembly times and costs.

In the metering devices described in EP 1 046 809 A2, one of which is exemplary shown in Fig. 4, the valve body 1 comprises an actuator chamber 9 and a fluid chamber 2 terminating with a metering opening 3, between which chambers the sealing element 101 - 10n is arranged. The axially moveable valve needle 4 passes through the fluid chamber 2. The valve needle 4 has a first end 5 that controls the opening and closing of the metering opening 3, and a second end 6 that cooperates with the actuator assembly 7, 8 arranged in the actuator chamber 9 and controlling the axial movement of the valve needle 4. The actuator assembly comprises a piezo stack 7 and a bottom cap 8. The bottom cap 8 of the actuator assembly is in Hertzian contact with the second end 6 of the valve needle 4, since the second end 6 of the valve needle 4 is biased against the bottom cap 8 by a helical spring 12, which is axially compressed arranged between a spring seat 14 of the valve body 1 and an abutting washer 13 fastened to the valve needle 4.

The sealing element 101 - 10n is formed by a metal bellows 101, an element able to be axially deformed and to guarantee the required separation between the two described volumes, e.g. gasoline in the fluid chamber 2 and the piezo stack 7 as part of the actuator assembly outside, i.e. in the actuator chamber 9. The top collar of the metal bellows 101 is attached to a washer 10m that is attached on the valve needle 4 and the bottom collar of the metal bellows 101 is attached to a ring element 10n attached to the inner cylindrical surface 11 of the valve body 1. The metal bellows 101 offers a high mechanical elasticity in the direction of movement of the valve needle 4, a sufficient resistance to fuel pressures of up to 500 bar, and a high reliability with respect to leakage throughout the required temperature range of -40 °C to +150 °C. However, an injector with such a metal bellows with these dimensions has disadvantages of high component and manufacturing costs, as well as a complex assembly, requiring two hermetic welds to attach the metal bellows to the washer 10m and to the ring element 10n, as well as two hermetic welds to attach the washer 10m to the valve needle 4 and the ring element 10n to the inner cylindrical surface 11 of the valve body 1.

DE 100 16 247 A1 discloses an injection valve with a sealing membrane that provides isolation between a fluid chamber and an actuator chamber. The sealing membrane is formed as a washer with a central recess. A positioning element, that is connected with an actuator, has a piston that is arranged in the central recess of the sealing membrane. The sealing membrane is hermetically welded to the positioning element and to the valve body.

In view of the foregoing, it is the object underlying the present invention to provide a metering device of the above-mentioned type which is easier and more economic to manufacture, while still fulfilling the requirements specified above.

This object is achieved by a metering device with the features of appended claims 1, 3 or 5.

Advantageous embodiments of the metering device according to the present invention are disclosed in the respective following dependent claims.

According to a first embodiment of the invention, in a metering device with the features of claim 1, the sealing element is formed by an elastic element that is hermetically fastened to the valve body and to a bottom cap of the actuator assembly or a thermal compensator, which bottom cap is in contact with the second end of the valve needle. Thus, the sealing may be applied between different parts than according to prior art, thereby providing additional liberty in the design of the device so that different requirements may be individually fulfilled. The sealing element comprises a metallic washer which is hermetically connected at its inner diameter with the bottom cap of the actuator assembly and at its outer diameter with an inner cylindrical surface of the valve body. Such a metallic washer provides a rigid and secure connection between the respective components. Further, the sealing element comprises a rubber ring designed to fit between the bottom cap of the actuator assembly and the inner surface, preferably a sealing seat, of the valve body and being arranged to be in contact with the metallic washer on the side of the actuator chamber. This confers robustness to the sealing.

This particularly applies, if, preferably, a conical part of the metallic washer is designed to resist a deformation due to peaks of pressure generated in the fluid chamber due to the impingement of forces from the bottom cap of the actuator assembly to the second end of the valve needle.

According to a second embodiment of the invention, the sealing element comprises a metal bellows which is hermetically connected at its upper collar with the bottom cap of the actuator assembly and at its lower collar with an inner cylindrical surface of the valve body. By using a metal bellows, the present invention can build on the experiences with prior art devices. A special arrangement of the metal bellows provides additional liberty with respect to the design of the device. Further, the sealing element comprises a rubber element designed to fit between the metal bellows and the inner surface, preferably a sealing seat, of the valve body and being arranged to be in contact with the metal bellows on the side of the actuator chamber. Also in this embodiment, the elastic element can provide robustness to the sealing.

In this case, preferably, the metal bellows is designed to resist a deformation due to peaks of pressure generated in the fluid chamber due to the impingement of forces from the bottom cap of the actuator assembly to the second end of the valve needle. Thus, the general requirements can be fulfilled.

According to a third embodiment of the invention, the sealing element comprises a metal bellows which is hermetically connected at its upper collar with the bottom cap of the actuator assembly, and a flange that is hermetically connected or integrally combined with a lower collar of the metal bellows and hermetically connected with an inner cylindrical surface of the valve body. Thereby, a further possibility of arranging a well-experienced metal bellows is provided. Further, the sealing element comprises a rubber element designed to fit between the metal bellows and the flange. Thereby, rigidity is conferred to the metal bellows.

In this case, preferably, the metal bellows is designed to resist a deformation due to peaks of pressure generated in the fluid chamber due to the impingement of forces from the bottom cap of the actuator assembly to the second end of the valve needle. Thus, also in the third embodiment the general requirements may be fulfilled.

In the metering device according to anyone of the preferred embodiments, the hermetical connection between two elements might comprise the welding of these elements.

The invention, both its construction and its method of operation together with additional objects and advantages thereof, will be best understood from the following description of three specific exemplary embodiments thereof taken in conjunction with the accompanying drawings, wherein
- Fig. 1: is a schematic axial cross section of a part of an injection valve according to a first preferred embodiment according to the present invention;
- Fig. 2: is a schematic axial cross section of a part of an injection valve according to a second preferred embodiment according to the present invention;
- Fig. 3: is a schematic axial cross section of a part of an injection valve according to a third preferred embodiment according to the present invention; and
- Fig. 4: is a schematic axial cross section of an injection valve according to the prior art.

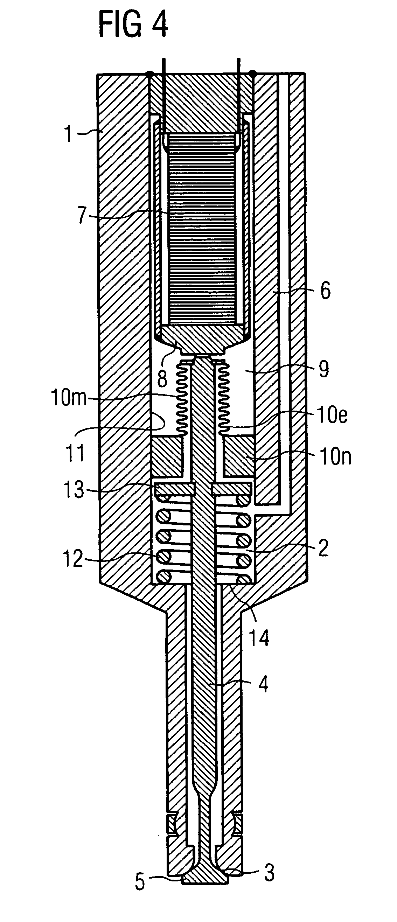

In the following description of three exemplary embodiments according to the present invention the same reference signs as those shown in Fig. 4 denote the same or equal parts that have basically the same functionality. These parts might have a slightly different arrangement in respect to each other than that shown in Fig. 4, but nevertheless have the same functionality as is apparent to the skilled person. Therefore, a detailed description of those parts is omitted here and only the differences of the metering device according to the respective embodiment of the present invention are described in detail.

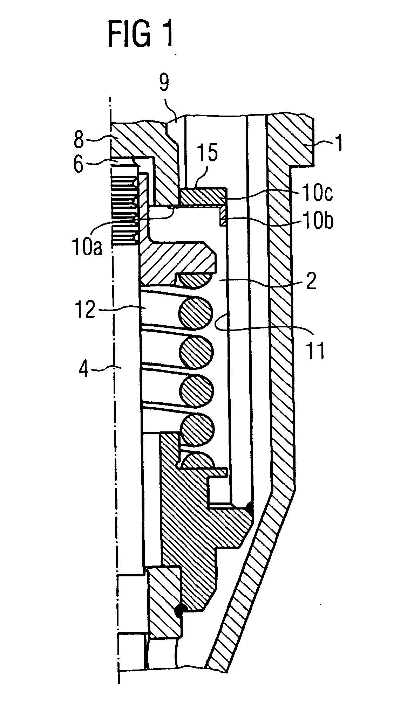

According to the first preferred embodiment of the present invention, as shown in Fig. 1, the hermetic sealing between the fluid chamber 2 and the actuator chamber 9 is performed by a metallic washer that comprises a conical part 10a rigidly and hermetically connected, e.g. by welding, at its inner diameter to an end stop surface of the bottom cap 8 of the piezoelectric actuator. Alternatively, the conical part 10a might also be rigidly connected, e.g. by welding, at its inner diameter to an end stop surface of a thermal compensator, in case such a compensator is inserted between the piezo stack 7 and the second end 6 of the valve needle 4. The outer diameter of the conical part 10a is hermetically connected to a ring part 10b of the metallic washer that is rigidly and hermetically connected, e.g. by welding, to the inner cylindrical surface 11 of the valve body 1. The conical part 10a of the metallic washer is able to resist to the deformations due to peaks of pressure within the fluid chamber. In order to confer robustness to this sealing, between the sealing seat 15 of the valve body 1 and the conical part 10a of the metallic washer, an elastic element 10c, e.g. a rubber ring, might be arranged that might have a rectangular cross section, as shown in Fig. 1. Since in this embodiment the helical spring 12 that provides the bias of the valve needle 4 to close the metering opening 3 is "immersed" in the fluid, the fluid chamber might be designed rather big which leads to less high peaks of pressure.

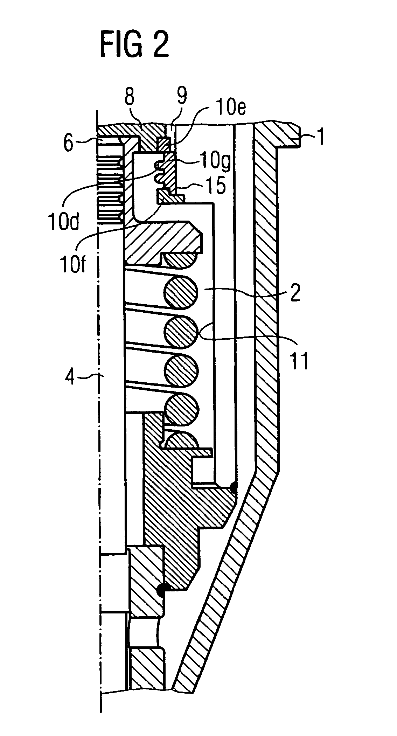

According to the second preferred embodiment of the present invention, as shown in Fig. 2, the hermetic sealing between the fluid chamber 2 and the actuator chamber 9 is performed by a metal bellows 10d with standard and experienced dimensions, which is rigidly and hermetically connected, e.g. by welding, at its upper collar 10e to an end stop surface of the bottom cap 8 of the piezoelectric actuator. As in the first preferred embodiment, alternatively, the upper collar 10e might also be rigidly connected, e.g. by welding, to an end stop surface of a thermal compensator, in case such a compensator is inserted between the piezo stack 7 and the second end 6 of the valve needle 4. The lower collar 10f of the metal bellows 10d is rigidly and hermetically connected, e.g. by welding, to the inner cylindrical surface 11 of the valve body 1. The metal bellows 10d is able to resist to the deformations due to peaks of pressure within the fluid chamber. In order to confer robustness to this sealing, between the sealing seat 15 of the valve body 1 and the metal bellows 10d, an elastic element 10g might be arranged that preferably shows a cross section adapted to that of the metal bellows 10d, as shown in Fig. 2. Since also in this embodiment the helical spring 12 that provides the bias of the valve needle 4 to close the metering opening 3 is "immersed" in the fluid, the fluid chamber might be designed rather big which leads to less high peaks of pressure.

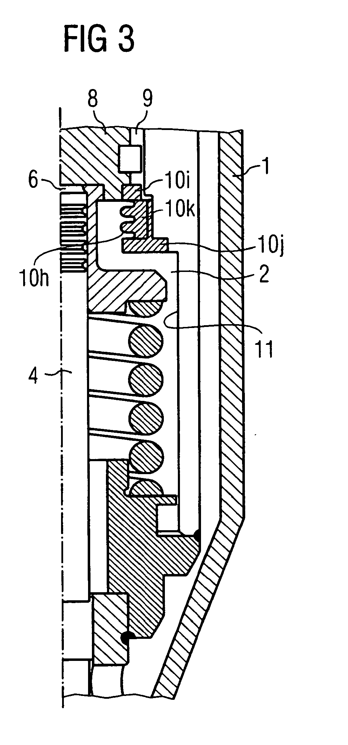

The third preferred embodiment of the present invention, as shown in Fig. 3, comprises a modification of the second preferred embodiment of the present invention. The hermetic sealing between the fluid chamber 2 and the actuator chamber 9 is also performed by a metal bellows 10h with standard and experienced dimensions, which is rigidly and hermetically connected, e.g. by welding, at its upper collar 10i to an end stop surface of the bottom cap 8 of the piezoelectric actuator. As in the first and second preferred embodiments, alternatively, the upper collar 10i might also be rigidly connected, e.g. by welding, to an end stop surface of a thermal compensator, in case such a compensator is inserted between the piezo stack 7 and the second end 6 of the valve needle 4. The lower collar 10j of the metal bellows 10d is rigidly and hermetically connected, e.g. by welding, to a flange or integrally formed as a flange that is rigidly and hermetically connected, e.g. by welding, to the inner cylindrical surface 11 of the valve body 1. The flange provides a surface oppositely arranged to the metal bellows 10d on the side of the actuator chamber 9. The metal bellows 10h is able to resist to the deformations due to peaks of pressure within the fluid chamber. In order to confer robustness to this sealing, between the flange of the lower collar 10j and the metal bellows 10h, an elastic element 10k might be arranged that preferably shows a cross section adapted to that of the metal bellows 10h, as shown in Fig. 3. In comparison to the second preferred embodiment of the present invention, this third preferred embodiment ensures an easier manufacturing. Since also in this embodiment the helical spring 12 that provides the bias of the valve needle 4 to close the metering opening 3 is "immersed" in the fluid, the fluid chamber might be designed rather big which leads to less high peaks of pressure.

A metering device for dosing pressurized fluids, in particular an injection valve for a fuel injection system in an internal combustion engine, is disclosed in which the hermetic sealing between the fluid chamber for the pressurized fluid to be dosed and the actuator chamber is provided by an elastic element that is hermetically fastened to the valve body and to a bottom cap of the actuator assembly or a thermal compensator.

The features disclosed in the foregoing description, in the drawings, and in the claims may alone as well as in any possible combination be important for the realisation of the invention.

## Claims

1. A metering device for dosing pressurized fluids, in particular an injection valve for a fuel injection system in an internal combustion engine, comprising
- a valve body (1) comprising a fluid chamber (2) for the pressurized fluid to be dosed, the fluid chamber (2) terminating with a metering opening (3),
- an axially moveable valve needle (4) passing through the fluid chamber (2), the valve needle (4) having a first end (5) that controls the opening and closing of the metering opening (3), and a second end (6) that cooperates with an actuator assembly (7, 8) arranged in an actuator chamber (9) and controlling the axial movement of the valve needle (4), and
- a sealing element (10a - 10c; 10d - 10g; 10h - 10j; 101 - 10n) hydraulically isolating the actuator chamber (9) and the fluid chamber (2), the sealing element (10a - 10c; 10d - 10g; 10h - 10j) being formed by an elastic element that is hermetically fastened to the valve body (1) and to a bottom cap (8) of the actuator assembly (7, 8) or a thermal compensator, which bottom cap (8) is in contact with the second end (6) of the valve needle (4), and comprising a metallic washer (10a, 10b) which is hermetically connected at its inner diameter with the bottom cap (8) of the actuator assembly (7, 8) and at its outer diameter with an inner cylindrical surface (11) of the valve body (1),
**characterized in that**
the sealing element comprises a rubber ring (10c) designed to fit between the bottom cap (8) of the actuator assembly (7, 8) or a thermal compensator and the inner surface (11), preferably a sealing seat (15), of the valve body (1) and being arranged to be in contact with the metallic washer (10a, 10b) on the side of the actuator chamber (9).

2. The metering device according to claim 1,
**characterized in that**
a conical part (10a) of the metallic washer (10a, 10b) is designed to resist a deformation due to peaks of pressure generated in the fluid chamber (2) due to the impingement of forces from the bottom cap (8) of the actuator assembly (7, 8) to the second end (6) of the valve needle (4).

3. A metering device for dosing pressurized fluids, in particular an injection valve for a fuel injection system in an internal combustion engine, comprising
- a valve body (1) comprising a fluid chamber (2) for the pressurized fluid to be dosed, the fluid chamber (2) terminating with a metering opening (3),
- an axially moveable valve needle (4) passing through the fluid chamber (2), the valve needle (4) having a first end (5) that controls the opening and closing of the metering opening (3), and a second end (6) that cooperates with an actuator assembly (7, 8) arranged in an actuator chamber (9) and controlling the axial movement of the valve needle (4), and
- a sealing element (10a - 10c; 10d - 10g; 10h - 10j; 101 - 10n) hydraulically isolating the actuator chamber (9) and the fluid chamber (2), the sealing element (10a - 10c; 10d - 10g; 10h - 10j) being formed by an elastic element that is hermetically fastened to the valve body (1) and to a bottom cap (8) of the actuator assembly (7, 8) or a thermal compensator, which bottom cap (8) is in contact with the second end (6) of the valve needle (4),
**characterized in that**
the sealing element comprises a metal bellows (10d) which is hermetically connected at its upper collar (10e) with the bottom cap (8) of the actuator assembly (7, 8) or a thermal compensator and at its lower collar (10f) with an inner cylindrical surface (11) of the valve body (1) and a rubber element (10g) designed to fit between the metal bellows (10d) and the inner surface (11), preferably a sealing seat (15), of the valve body (1) and being arranged to be in contact with the metal bellows (10d) on the side of the actuator chamber (9).

4. The metering device according to claim 3,
**characterized in that**
the metal bellows (10d) is designed to resist a deformation due to peaks of pressure generated in the fluid chamber (2) due to the impingement of forces from the bottom cap (8) of the actuator assembly (7, 8) to the second end (6) of the valve needle (4).

5. A metering device for dosing pressurized fluids, in particular an injection valve for a fuel injection system in an internal combustion engine, comprising
- a valve body (1) comprising a fluid chamber (2) for the pressurized fluid to be dosed, the fluid chamber (2) terminating with a metering opening (3),
- an axially moveable valve needle (4) passing through the fluid chamber (2), the valve needle (4) having a first end (5) that controls the opening and closing of the metering opening (3), and a second end (6) that cooperates with an actuator assembly (7, 8) arranged in an actuator chamber (9) and controlling the axial movement of the valve needle (4), and
- a sealing element (10a - 10c; 10d - 10g; 10h - 10j; 101 - 10n) hydraulically isolating the actuator chamber (9) and the fluid chamber (2), the sealing element (10a - 10c; 10d - 10g; 10h - 10j) being formed by an elastic element that is hermetically fastened to the valve body (1) and to a bottom cap (8) of the actuator assembly (7, 8) or a thermal compensator, which bottom cap (8) is in contact with the second end (6) of the valve needle (4),
**characterized in that**
the sealing element comprises
- a metal bellows (10h) which is hermetically connected at its upper collar (10i) with the bottom cap (8) of the actuator assembly (7, 8) or a thermal compensator,
- a flange (10j) that is hermetically connected or integrally combined with a lower collar of the metal bellows (10h) and hermetically welded with an inner cylindrical surface (11) of the valve body (1), and
- a rubber element (10k) designed to fit between the metal bellows (10h) and the flange (10j).

6. The metering device according to claim 5,
**characterized in that**
the metal bellows (10h) is designed to resist a deformation due to peaks of pressure generated in the fluid chamber (2) due to the impingement of forces from the bottom cap (8) of the actuator assembly (7, 8) to the second end (6) of the valve needle (4).

7. The metering device according to anyone of claims 1 to 6,
**characterized in that**
the hermetical connection between two elements comprises the welding of these elements.

## Patentansprüche

1. Dosiervorrichtung zur Dosierung druckbeaufschlagter Flüssigkeiten, insbesondere ein Einspritzventil für ein Kraftstoffeinspritzsystem in einem Verbrennungsmotor, das Folgendes beinhaltet:
- einen Ventilkörper (1), der eine Flüssigkeitskammer (2) für die zu dosierende druckbeaufschlagte Flüssigkeit beinhaltet, wobei die Flüssigkeitskammer (2) in einer Dosieröffnung (3) endet,
- eine axial bewegliche Ventilnadel (4), die durch die Flüssigkeitskammer (2) geht, wobei die Ventilnadel (4) ein erstes Ende (5) hat, das das Öffnen und Schließen der Dosieröffnung (3) steuert, sowie ein zweites Ende (6), das mit einer Stellglied-Baugruppe (7, 8) kooperiert, die in einer Stellgliedkammer (9) angeordnet ist und die Axialbewegung der Ventilnadel (4) steuert, und
- ein Dichtungselement (10a - 10c; 10d - 10g; 10h - 10j; 101 - 10n), das die Stellgliedkammer (9) und die Flüssigkeitskammer (2) hydraulisch voneinander isoliert, wobei das Dichtungselement (10a - 10c; 10d - 10g; 10h - 10j) von einem elastischen Element gebildet wird, das hermetisch am Ventilkörper (1) und an einer unteren Verschlusskappe (8) der Stellglied-Baugruppe (7, 8) oder einem Wärmekompensator befestigt ist, wobei die untere Verschlusskappe (8) in Kontakt mit dem zweiten Ende (6) der Ventilnadel (4) ist und eine Metallunterlegscheibe (10a, 10b) beinhaltet, die über ihren Innendurchmesser hermetisch mit der unteren Verschlusskappe (8) der Stellglied-Baugruppe (7, 8) und über ihren Außendurchmesser hermetisch mit der Innenzylinderfläche (11) des Ventilkörpers (1) verbunden ist,
**dadurch gekennzeichnet, dass**
das Dichtungselement einen Gummiring (10c) beinhaltet, der so ausgelegt ist, dass er zwischen die untere Verschlusskappe (8) der Stellglied-Baugruppe (7,8) bzw. einen Wärmekompensator und die Innenfläche (11), vorzugsweise ein Dichtungssitz (15), des Ventilkörpers (1) passt und so angeordnet ist, dass er in Kontakt mit der Metallunterlegscheibe (10a, 10b) auf der Seite der Stellgliedkammer (9) ist.

2. Dosiervorrichtung nach Anspruch 1,
**dadurch gekennzeichnet, dass** ein konischer Anteil (10a) der Metallunterlegscheibe (10a, 10b) so ausgelegt ist, dass er einer Verformung auf Grund von Druckspitzen widersteht, die in der Flüssigkeitskammer (2) auf Grund der Auswirkung von Kräften von der unteren Verschlusskappe (8) der Stellglied-Baugruppe (7,8) auf das zweite Ende (6) der Ventilnadel (4) erzeugt werden.

3. Dosiervorrichtung zur Dosierung von druckbeaufschlagten Flüssigkeiten, insbesondere ein Einspritzventil für ein Kraftstoffeinspritzsystem in einem Verbrennungsmotor, das Folgendes beinhaltet:
- einen Ventilkörper (1), der eine Flüssigkeitskammer (2) für die zu dosierende druckbeaufschlagte Flüssigkeit beinhaltet, wobei die Flüssigkeitskammer (2) mit einer Dosieröffnung (3) endet,
- eine axial bewegliche Ventilnadel (4), die durch die Flüssigkeitskammer (2) geht, wobei die Ventilnadel (4) ein erstes Ende (5) hat, das das Öffnen und Schließen der Dosieröffnung (3) steuert, sowie ein zweites Ende (6), das mit einer Stellglied-Baugruppe (7, 8) kooperiert, die in einer Stellgliedkammer (9) angeordnet ist und die Axialbewegung der Ventilnadel (4) steuert, und
- ein Dichtungselement (10a - 10c; 10d - 10g; 10h - 10j; 101 - 10n), das die Stellgliedkammer (9) und die Flüssigkeitskammer (2) hydraulisch voneinander isoliert, wobei das Dichtungselement (10a - 10c; 10d - 10g; 10h - 10j) von einem elastischen Element gebildet wird, das hermetisch am Ventilkörper (1) und an einer unteren Verschlusskappe (8) der Stellglied-Baugruppe (7, 8) oder einem Wärmekompensator befestigt ist, wobei die untere Verschlusskappe (8) in Kontakt mit dem zweiten Ende (6) der Ventilnadel (4) ist
**dadurch gekennzeichnet, dass**
das Dichtungselement einen Metallbalg (10d), der an seinem oberen Bund (10e) hermetisch mit der unteren Verschlusskappe (8) der Stellglied-Baugruppe (7, 8) oder einem Wärmekompensator und an seinem unteren Bund (10f) hermetisch mit einer Innenzylinderfläche (11) des Ventilkörpers (1) verbunden ist, und ein Gummielement (10g), das so ausgelegt ist, dass es zwischen den Metallbalg (10d) und die Innenfläche (11), vorzugsweise ein Dichtungssitz (15), des Ventilkörpers (1) passt und so angeordnet ist, dass es auf der Seite der Stellgliedkammer (9) in Kontakt mit dem Metallbalg (10d) ist, beinhaltet.

4. Dosiervorrichtung nach Anspruch 3,
**dadurch gekennzeichnet, dass** der Metallbalg (10d) so ausgelegt ist, dass er einer Verformung auf Grund von Druckspitzen widersteht, die in der Flüssigkeitskammer (2) auf Grund der Auswirkung von Kräften von der unteren Verschlusskappe (8) der Stellglied-Baugruppe (7,8) auf das zweite Ende (6) der Ventilnadel (4) erzeugt werden.

5. Dosiervorrichtung zur Dosierung von druckbeaufschlagten Flüssigkeiten, insbesondere ein Einspritzventil für ein Kraftstoffeinspritzsystem in einem Verbrennungsmotor, das Folgendes beinhaltet:
- einen Ventilkörper (1), der eine Flüssigkeitskammer (2) für die zu dosierende druckbeaufschlagte Flüssigkeit beinhaltet, wobei die Flüssigkeitskammer (2) in einer Dosieröffnung (3) endet,
- eine axial bewegliche Ventilnadel (4), die durch die Flüssigkeitskammer (2) geht, wobei die Ventilnadel (4) ein erstes Ende (5) hat, das das Öffnen und Schließen der Dosieröffnung (3) steuert, sowie ein zweites Ende (6), das mit einer Stellglied-Baugruppe (7, 8) kooperiert, die in einer Stellgliedkammer (9) angeordnet ist und die Axialbewegung der Ventilnadel (4) steuert, und
- ein Dichtungselement (10a - 10c; 10d - 10g; 10h - 10j; 101 - 10n), das die Stellgliedkammer (9) und die Flüssigkeitskammer (2) hydraulisch voneinander isoliert, wobei das Dichtungselement (10a - 10c; 10d - 10g; 10h - 10j) von einem elastischen Element gebildet wird, das hermetisch am Ventilkörper (1) und an einer unteren Verschlusskappe (8) der Stellglied-Baugruppe (7, 8) oder einem Wärmekompensator befestigt ist, wobei die untere Verschlusskappe (8) in Kontakt mit dem zweiten Ende (6) der Ventilnadel (4) ist,
**dadurch gekennzeichnet, dass**
das Dichtungselement Folgendes beinhaltet:
- einen Metallbalg (10h), der hermetisch an seinem oberen Bund (10i) mit der unteren Verschlusskappe (8) der Stellglied-Baugruppe (7,8) oder einem Wärmekompensator verbunden ist,
- einen Flansch (10j), der hermetisch mit dem unteren Bund des Metallbalgs (10h) verbunden oder komplett zusammen mit dem Bund als Flansch ausgebildet und hermetisch mit der Innenzylinderfläche (11) des Ventilkörpers (1) zusammengeschweißt ist, und
- ein Gummielement (10k), das so ausgelegt ist, dass es zwischen den Metallbalg (10h) und den Flansch (10j) passt.

6. Dosiervorrichtung nach Anspruch 5,
**dadurch gekennzeichnet, dass** der Metallbalg (10h) so ausgelegt ist, dass er einer Verformung auf Grund von Druckspitzen widersteht, die in der Flüssigkeitskammer (2) auf Grund der Auswirkung von Kräften von der unteren Verschlusskappe (8) der Stellglied-Baugruppe (7,8) auf das zweite Ende (6) der Ventilnadel (4) erzeugt werden.

7. Dosiervorrichtung nach jedem der Ansprüche 1 bis 6,
**dadurch gekennzeichnet, dass** die hermetische Verbindung zwischen zwei Elementen das Verschweißen dieser Elemente beinhaltet.

## Revendications

1. Dispositif de dosage pour doser des fluides pressurisés, en particulier une soupape d'injection pour un système d'injection de carburant dans un moteur à combustion interne, comprenant
- un corps de soupape (1) ayant une chambre de fluide (2) destinée au fluide pressurisé devant être dosé, la chambre de fluide (2) se terminant par une ouverture de dosage (3),
- un pointeau de soupape à déplacement axial (4) passant à travers la chambre de fluide (2), le pointeau de soupape (4) ayant une première extrémité (5) qui commande l'ouverture et la fermeture de l'ouverture de dosage (3), et une seconde extrémité (6) qui coopère avec un ensemble d'actionneur (7, 8) disposé dans une chambre d'actionneur (9), et commandant le déplacement axial du pointeau de soupape (4), et
- un élément formant joint (10a - 10c ; 10d - 10g ; 10h - 10j ; 101 - 10n) isolant au plan hydraulique la chambre d'actionneur (9) et la chambre de fluide (2), l'élément formant joint (10a - 10c ; 10d - 10g ; 10h - 10j) étant constitué d'un élément élastique qui est hermétiquement fixé au corps de soupape (1) et à un culot inférieur (8) de l'ensemble d'actionneur (7, 8) ou à un compensateur thermique, lequel culot inférieur (8) est en contact avec la seconde extrémité (6) du pointeau de soupape (4), et comprenant une rondelle métallique (10a, 10b) qui est hermétiquement reliée, au niveau de son diamètre intérieur, au culot inférieur (8) de l'ensemble d'actionneur (7, 8) et, au niveau de son diamètre extérieur, à une surface cylindrique intérieure (11) du corps de soupape (1),
**caractérisé en ce que**
l'élément formant joint comprend un anneau en caoutchouc (10c) conçu pour s'ajuster entre le culot inférieur (8) de l'ensemble d'actionneur (7, 8) ou un compensateur thermique, et la surface intérieure (11), de préférence un siège de joint (15), du corps de soupape (1), et disposé de façon à être en contact avec la rondelle métallique (10a, 10b) du côté de la chambre d'actionneur (9).

2. Dispositif de dosage selon la revendication 1, **caractérisé en ce que**
une partie conique (10a) de la rondelle métallique (10a, 10b) est conçue pour résister à une déformation due à des pics de pression générés dans la chambre de fluide (2) suite à l'impact de forces provenant du culot inférieur (8) de l'ensemble d'actionneur (7, 8) sur la seconde extrémité (6) du pointeau de soupape (4).

3. Dispositif de dosage pour doser des fluides pressurisés, en particulier une soupape d'injection pour un système d'injection de carburant dans un moteur à combustion interne, comprenant
- un corps de soupape (1) ayant une chambre de fluide (2) destinée au fluide pressurisé devant être dosé, la chambre de fluide (2) se terminant par une ouverture de dosage (3),
- un pointeau de soupape à déplacement axial (4) passant à travers la chambre de fluide (2), le pointeau de soupape (4) ayant une première extrémité (5) qui commande l'ouverture et la fermeture de l'ouverture de dosage (3), et une seconde extrémité (6) qui coopère avec un ensemble d'actionneur (7, 8) disposé dans une chambre d'actionneur (9) et commandant le déplacement axial du pointeau de soupape (4), et
- un élément formant joint (10a - 10c ; 10d - 10g ; 10h - 10j ; 101 - 10n) isolant au plan hydraulique la chambre d'actionneur (9) et la chambre de fluide (2), l'élément formant joint (10a - 10c ; 10d - 10g ; 10h - 10j) étant constitué d'un élément élastique qui est hermétiquement fixé au corps de soupape (1) et à un culot inférieur (8) de l'ensemble d'actionneur (7, 8) ou à un compensateur thermique, lequel culot inférieur (8) est en contact avec la seconde extrémité (6) du pointeau de soupape (4),
**caractérisé en ce que**
l'élément formant joint comprend un soufflet métallique (10d) qui est hermétiquement relié, au niveau de son bourrelet supérieur (10e), au culot inférieur (8) de l'ensemble d'actionneur (7, 8) ou à un compensateur thermique et, au niveau de son bourrelet inférieur (10f), à une surface cylindrique intérieure (11) du corps de soupape (1), ainsi qu'un élément en caoutchouc (10g) conçu pour s'ajuster entre le soufflet métallique (10d) et la surface intérieure (11), de préférence un siège de joint (15), du corps de soupape (1), et disposé de façon à être en contact avec le soufflet métallique (10d) du côté de la chambre d'actionneur (9).

4. Dispositif de dosage selon la revendication 3,
**caractérisé en ce que**
le soufflet métallique (10d) est conçu pour résister à une déformation due à des pics de pression générés dans la chambre de fluide (2) suite à l'impact de forces provenant du culot inférieur (8) de l'ensemble d'actionneur (7, 8) sur la seconde extrémité (6) du pointeau de soupape (4).

5. Dispositif de dosage pour doser des fluides pressurisés, en particulier une soupape d'injection pour un système d'injection de carburant dans un moteur à combustion interne, comprenant
- un corps de soupape (1) ayant une chambre de fluide (2) destinée au fluide pressurisé devant être dosé, la chambre de fluide (2) se terminant par une ouverture de dosage (3),
- un pointeau de soupape à déplacement axial (4) passant à travers la chambre de fluide (2), le pointeau de soupape (4) ayant une première extrémité (5) qui commande l'ouverture et la fermeture de l'ouverture de dosage (3), et une seconde extrémité (6) qui coopère avec un ensemble d'actionneur (7, 8) disposé dans une chambre d'actionneur (9) et commandant le déplacement axial du pointeau de soupape (4), et
- un élément formant joint (10a - 10c ; 10d - 10g ; 10h - 10j ; 101 - 10n) isolant au plan hydraulique la chambre d'actionneur (9) et la chambre de fluide (2), l'élément formant joint (10a - 10c ; 10d - 10g ; 10h - 10j) étant constitué d'un élément élastique qui est hermétiquement fixé au corps de soupape (1) et à un culot inférieur (8) de l'ensemble d'actionneur (7, 8) ou à un compensateur thermique, lequel culot inférieur (8) est en contact avec la seconde extrémité (6) du pointeau de soupape (4),
**caractérisé en ce que**
l'élément formant joint comprend
- un soufflet métallique (10h) qui est hermétiquement relié, au niveau de son bourrelet supérieur (10i), au culot inférieur (8) de l'ensemble d'actionneur (7, 8) ou à un compensateur thermique,
- une bride (10j) qui est hermétiquement reliée ou combinée d'un seul tenant à un bourrelet inférieur du soufflet métallique (10h) et hermétiquement soudée à une surface cylindrique intérieure (11) du corps de soupape (1), et
- un élément en caoutchouc (10k) conçu pour s'ajuster entre le soufflet métallique (10h) et la bride (10j).

6. Dispositif de dosage selon la revendication 5,
**caractérisé en ce que**
le soufflet métallique (10h) est conçu pour résister à une déformation due à des pics de pression générés dans la chambre de fluide (2) suite à l'impact de forces provenant du culot inférieur (8) de l'ensemble d'actionneur (7, 8) sur la seconde extrémité (6) du pointeau de soupape (4).

7. Dispositif de dosage selon l'une quelconque des revendications 1 à 6,
**caractérisé en ce que**
la liaison hermétique entre deux éléments comprend le soudage de ces éléments.
